# EUROPÄISCHE PATENTSCHRIFT

(11) **EP 3 889 279 B1**
(45) Veröffentlichungstag und Bekanntmachung des Hinweises auf die Patenterteilung: **21.05.2025**
(21) Anmeldenummer: 20212184.4
(22) Anmeldetag: 07.12.2020
(51) Int. Cl.: C22B 3/22, C22B 26/12

(54) **EXTRAKTION VON LITHIUM-IONEN UND ANDEREN SELTENEN ALKALIMETALL-IONEN AUS GEOTHERMALWASSER INNERHALB EINES BINÄREN GEOTHERMIEKRAFTWERKS**
EXTRACTION OF LITHIUM IONS AND OTHER RARE EARTH ALKALI METAL IONS FROM GEOTHERMAL WATER WITHIN A BINARY GEOTHERMAL POWER PLANT
EXTRACTION DES IONS DE LITHIUM ET D'AUTRES IONS RARES DE MÉTAL ALCALIS À PARTIR D'EAUX GÉOTHERMIQUES DANS UNE CENTRALE ÉLECTRIQUE GÉOTHERMIQUE BINAIRE

(30) Priorität: 02.04.2020 DE 102020109137
(43) Veröffentlichungstag der Anmeldung: 06.10.2021
(73) Patentinhaber: Karlsruher Institut für Technologie, 76131 Karlsruhe (DE)
(72) Erfinder: Grimmer, Jens C. H., 76137 Karlsruhe (DE); Saravia, Florencia, 76139 Karlsruhe (DE)

(56) Entgegenhaltungen:
- ABDEL RAHMAN AHMED ET AL: "Analysis and assessment of a geothermal based cogeneration system and lithium extraction", INTERNATIONAL JOURNAL OF ENERGY RESEARCH, vol. 44, no. 12, 25 March 2020 (2020-03-25), GB, pages 9586 - 9597, XP055801184, ISSN: 0363-907X, DOI: 10.1002/er.5356
- LI XIANHUI ET AL: "Membrane-based technologies for lithium recovery from water lithium resources: A review", JOURNAL OF MEMBRANE SCIENCE, ELSEVIER BV, NL, vol. 591, 30 July 2019 (2019-07-30), XP085764669, ISSN: 0376-7388, [retrieved on 20190730], DOI: 10.1016/J.MEMSCI.2019.117317
- SINGH KARANDAVE: "Review of the Current State of the Geothermal Industry with a focus on The Netherlands", 15 August 2015 (2015-08-15), pages 1 - 83, XP055801527, Retrieved from the Internet <URL:https://dspace.library.uu.nl/bitstream/handle/1874/318191/MSc.%20Thesis.pdf?sequence=2&isAllowed=y> [retrieved on 20210504]

## Beschreibung

Die vorliegende Erfindung betrifft eine Vorrichtung und ein Verfahren zur Extraktion von Lithium-Ionen und anderen seltenen Alkalimetall-Ionen aus Geothermalwasser innerhalb eines binären Geothermiekraftwerks.

In hochsalinaren Tiefenwässern des Oberrheingrabens, aber auch in anderen Geothermie-Gebieten (z.B. Salton Sea, Kalifornien/USA; Clayton Valley, Nevada/USA; Latium, Italien), tritt Lithium in relativ hohen Konzentrationen auf (Williams et al., Geochimica et Cosmochimica Acta 1989, 53, 8, 1905-1920; Sanjuan et al., Chemical Geology 2016, 428, 27-47).

Eine sehr hohe Anreicherung von seltenen Metallen (Lithium, Cäsium, Rubidium) findet sich auch in geothermischen Wässer entlang der Süd-Nord-Richtung des Geothermiegebietes Shiquanhe-Yarlung Zangbo, in der Nähe der Yarlung Zangbo Sutur Zone, Südtibet, China (W. Wang et al., Scientific Reports 2019, 9, 7918).

Eine große Herausforderung besteht darin, seltene Alkalimetall-Ionen, wie Lithium-, Cäsium- und Rubidium-Ionen, quantitativ, wirtschaftlich und umweltverträglich aus geothermischen Wässern zu gewinnen. Insbesondere ist die Lithium-Gewinnung aus geothermischen Solen, die innerhalb eines Geothermiekraftwerks eingesetzt werden, von großem wirtschaftlichen Interesse.

In der Literatur werden einige Verfahren beschrieben, wie Lithium, Cäsium und Rubidium allgemein aus Salzsolen gewonnen werden können:
Meshram *et al.* beschreiben Absorptionsmethoden (Ionentauscher), Flüssig-Flüssig-Extraktionsmethoden und Ausfällungsprozesse zur Extraktion von Lithium aus Erzen, Mineralien und Salzsolen. (P. Meshram et al., Hydrometallurgy 2014, 150, 192-208).

Die WO2014172032A2 beschreibt ein allgemeines Verfahren zur selektiven oder kombinierten Entfernung von Rubidium und/oder Cäsium aus Salzsolen unter Verwendung von Tetrafluorboraten. Offenbart werden auch Verfahren zur Herstellung von Rubidium- und/oder Cäsiumchloriden unter Verwendung von ionischen Flüssigkeiten und Austauschermedien.

Bei chemischen Ausfällprozessen zur Abtrennung von zweiwertigen Kationen aus der Salzsole kann es allerdings neben der Ausfällung von Magnesium- und Calcium-Salzen auch zur Ausfällung von schwermetall- bzw. radionuklidhaltigen Verbindungen kommen.

In der WO2016116687A1 wird ein technisches Verfahren beschrieben, das auf Flüssig-Flüssig-Extraktion von Ionen aus Salzsolen mittels einer ionenabsorbierenden Flüssigkeit basiert und bisher nur unter atmosphärischem Druck genutzt wurde.

Huang *et al.* beschreiben ein Flüssig-Flüssig-Extraktionsverfahren zur Extraktion von Rubidium und Cäsium aus Salzsolen mithilfe von 1,4,7,10,13,16-Hexaoxacyclooctadecan (18C6) und 1-Butyl-3-methylimidazolium-hexafluorphosphat (D. Huang et al., Polish Journal of Chemical Technology 2018, 20, 2, 40-46).

A. A. Rahman *et al.* offenbaren ein simuliertes Kraft-Wärme-Kopplungs-System, umfassend ein integriertes geothermisches Kraftwerk auf der Basis von Double-Flash-Binärtechnologie mit einem Teilsystem zur Lithiumgewinnung durch Ausfällung von Li₂CO₃. Die schematische Skizzierung der Simulationsanlage in A. A. Rahman *et al.* umfasst das Pumpen von Wasser aus einem geothermischen Reservoir, das Leiten des Wassers durch einen Wärmetauscher, das Transportieren des Wassers zu der Lithiumextraktionseinheit und das erneute Einspritzen des Wassers durch einen Austrittsbrunnen. Die Simulationsbedingungen in A. A. Rahman *et al.* sind auf ein Geothermiekraftwerk im Salton Sea Geothermal Field, Kalifornien, USA, angepasst (A. A. Rahman et al., Int J Energy Res. 2020, 44, 9586-9597).

Die US10604414B2 beschreibt ein System und sequentielles Verfahren zur Rückgewinnung von Lithium, Zink und Mangan aus einer geothermischen Sole, insbesondere aus einer Sole der "Salton Sea Known Geothermal Resource Area", innerhalb eines Flash Steam-Kraftwerks. Das System und der Prozess umfassen: 1) die Entfernung von Verunreinigungen, wie Siliciumdioxid und Metallen, durch Oxidation und Co-Präzipitation; 2) die selektive Rückgewinnung von Lithiumchlorid aus dem Sole-Strom und dessen Konzentrierung unter Verwendung eines kontinuierlichen Gegenstrom-Ionenaustauschs unter Normaldruck; 2a) die optionale Aneinanderreihung weiterer Lithium-Extraktionsverfahren wie Flüssigextraktion-Umkehrosmose/Nanofiltration und Elektrolyse; und 3) die Umwandlung von Lithiumchlorid zu Lithiumcarbonat (unter Abkühlung auf nahezu Raumtemperatur) oder Lithiumhydroxid.

Die französische Firma Eramet hat ein Verfahren entwickelt, das mit einer linearen Anordnung von Ionentauschern, Umkehrosmose, Nanofiltration und Flüssig-Flüssig-Extraktion Lithium aus Salzsolen, beispielsweise aus den Salzwüsten Argentiniens, gewinnt (https://www.eramet.com/en/activities/- development-projects/lithium-project-new-growth-domain, aufgerufen am 29.01.2020).

Ionentauscher und Flüssig-Flüssig-Extraktionsmethoden müssen eine sehr hohe Selektivität für die Alkalimetall-Ionen erreichen, um spätere unter Umständen sehr aufwändige chemische Trennungsvorgänge zu vermeiden. Für die Nutzung von Ionentauschern und Flüssig-Flüssig-Extraktionsmethoden in Geothermiekraftwerken müsste ein Teil des Volumenstroms aus dem Thermalwasserkreislauf ausgekoppelt werden, da Ionentauscher und Flüssig-Flüssig-Extraktion nicht ohne Weiteres in den Stoffkreislauf eines Geothermiekraftwerks eingebaut werden können und somit die großen Volumenströme (bis zu 100 l/s) in Geothermie-Anlagen nicht genutzt werden können. Eine Interaktion der geothermischen Wässer mit Ionentauschern bzw. ionischen Flüssigkeiten ist nicht einfach zu realisieren, wenn die geothermischen Wässer weiterhin unter Druck und Temperaturen von ≥ 50 °C gehalten werden sollen, um Ausfällungen zu vermeiden.

Ionentauscherverfahren und Flüssig-Flüssig-Extraktionsmethoden benötigen weiterhin große Mengen nicht wiederverwertbarer Säure, in der Regel Salzsäure, für die Remobilisierung bzw. das Auswaschen von beispielsweise Lithium-Ionen (X. Zhao et al., Fluid Phase Equilibria 2018, 459, 129-137; Meshram et al., Hydrometallurgy 2014, 150, 192-208).

In Li *et al.* wird die Anwendbarkeit von Nanofiltrationsmembranen für die Rückgewinnung von Lithium aus Salzseesole mit einem hohen Magnesium-zu-Lithium-Massenverhältnis unter Variation des Betriebsdrucks, der Temperatur, der Konzentration zusätzlicher Kationen (Na⁺, K⁺, Ca²⁺) und der Konzentrationsverhältnisse von Magnesium-zu-Lithium bewertet, wobei für die Experimente ein Druckbereich von 15 - 35 bar, ein Temperaturbereich von 20 - 40 °C und ein niedriger pH-Wert (pH = 4 ± 0,2) gewählt wurde. Die Ergebnisse zeigen, dass die Ausbeute von Lithium und seine Abtrennung von Magnesium mit dem Druck zunimmt, während die Trennleistung mit steigender Temperatur abnimmt. Die Ergebnisse zeigen auch, dass der Zusatz eines Na⁺-Ionen- und K⁺-Ionenüberschusses zu der Testlösung die Rückhalterate von Li⁺-Ionen erhöht, der Zusatz von Ca²⁺-Ionen die Li⁺-Ionen-Rückhalterate hingegen erniedrigt (Li et al., Desalination 2019, 468, 114081).

Pramanik *et al.* haben Versuche zur Anreicherung von Lithium aus einer simulierten Salzseesole mit Hilfe eines integrierten Nanofiltrations- und Membrandestillationsprozesses unter einem Betriebsdruck von ≤ 10 bar durchgeführt. Hier wurden zwei Arten von Nanofiltrationsmembranen, nämlich NF90 und NF270, eingesetzt, um ihre Leistungen für die Lithium- und Magnesium-Abtrennung unter verschiedenen Betriebsbedingungen zu vergleichen. Die NF90- und NF270-Nanofiltrationsmembranen erreichten eine Lithium-Abtrennung von 23 % bzw. 44 %. Nach der Nanofiltrationsbehandlung konnte das abgetrennte Lithium durch die Verwendung eines Direktkontakt-Membrandestillationssystems weiter auf 80 % konzentriert werden (B. K. Pramanik et al., Journal of Environmental Chemical Engineering 2019, 7, 5, 103395).

Eine Gewinnung von seltenen Alkalimetall-Ionen, wie Lithium-, Cäsium- oder Rubidium-Ionen, aus Geothermalwasser innerhalb eines Geothermiekraftwerks unter Nutzung des Geothermalwasserkreislaufs, des Volumenstroms und der hohen Temperaturen von ≥ 50 °C, bei der gleichzeitig der herrschende Wasserdruck aufrechterhalten wird, der in Geothermalwasser aufgrund der sehr hohen Salinitäten (Total dissolved solids > 90 g/l) vorhandene erhöhte osmotische Druck überwunden wird und bei der eine chemische Ausfällung unerwünschter Inhaltsstoffe, wie schwermetall- bzw. radionuklidhaltiger Verbindungen, vermieden wird, ist bisher nicht beschrieben worden.

Somit liegt der vorliegenden Erfindung die Aufgabe zugrunde, ein Verfahren bereitzustellen, welches die Extraktion von Lithium-, Cäsium- oder Rubidium-Ionen aus dem Geothermalwasserkreislauf eines binären Geothermiekraftwerks unter möglichst effizienter Nutzung des Volumenstroms und der vorliegenden Temperatur- und Druckverhältnisse ermöglicht, ohne dass der laufende Betrieb des Geothermiekraftwerks und die Produktion von Strom und/oder Wärme eingeschränkt werden.

Die vorstehende technische Aufgabe wird durch die in den Ansprüchen gekennzeichneten Ausführungsformen gelöst.

Das erfindungsgemäße Verfahren umfasst die folgenden Schritte:
A) Hochpumpen von Geothermalwasser mit einer Temperatur von 120 °C - 180 °C aus einem geothermischen Reservoir **(11)** über eine Produktionsbohrung **(1)** in einen Wärmetauscher **(2)** unter einem Druck von 15 - 35 bar;
B) Durchlaufen des Geothermalwassers aus Schritt A) durch den Wärmetauscher **(2);**
C) Zuführung von 100 % des Geothermalwassers aus Schritt B) in mindestens ein Nanofiltrationsmodul **(3);**
D) Nanofiltration des in Schritt C) dem mindestens einem Nanofiltrationsmodul **(3)** zugeführten Geothermalwassers zur Abtrennung von Alkalimetall-Ionen und anderen einwertigen Ionen von mehrwertigen Ionen unter einem Druck von 15 - 35 bar und einer Temperatur von 50 °C - 80 °C und direkte Reinjektion der an mehrwertigen Ionen angereicherten Restlösung ins geothermische Reservoir **(11)** über mindestens eine Reinjektionsbohrung **(4);**
E) Überführung des Permeats der Nanofiltration aus Schritt D) in eine Ausfällungseinheit **(5a** oder **5b)** zur Ausfällung der noch vorhandenen zweiwertigen Erdalkali-Ionen;
F) Ausfällung der noch vorhandenen zweiwertigen Erdalkali-Ionen in der Ausfällungseinheit **(5a** oder **5b)** aus dem Permeat der Nanofiltration des Schrittes D);
G) Transport des an zweiwertigen Ionen abgereicherten Permeats aus Schritt F) durch eine Umwälzpumpe **(6a** oder **6b)** zu einem zweiten Wärmetauscher **(7a** oder **7b);**
H) Aufheizen des Permeats aus Schritt G) in dem zweiten Wärmetauscher **(7a** oder **7b)** auf 65 - 85 °C;
I) Membrandestillation **(8)** des in Schritt H) aufgeheizten Permeats unter Normaldruck und einer Temperatur von 65 °C - 85 °C;
J) Abtrennung von in Schritt I) aufkonzentrierten Lithium-Ionen in einer Abtrennungseinheit **(9)** durch Ausfällung, Ionentauscher, Absorptionsverfahren, Flüssig-Flüssigextraktion oder Elektrodialyse.

Die an Cäsium-Ionen und Rubidium-Ionen angereicherte Restlösung aus Schritt J) wird in einer bestimmten Ausführungsform in einer Abtrennungseinheit (10) weiterverarbeitet, um Cäsium-Ionen und Rubidium-Ionen zu extrahieren.

Merkmale der Erfindung liegen in der Entwicklung eines neuen Verfahrens zur Extraktion von Lithium-Ionen und gegebenenfalls von Cäsium- und Rubidium-Ionen aus Geothermalwasser innerhalb eines binären Geothermiekraftwerks.

Ein binäres Geothermiekraftwerk ist ein geothermisches Zweistoffkreislauf-Kraftwerk, in dem die thermische Energie des aus einem geothermischen Reservoir hochgepumpten Geothermalwassers durch einen Wärmetauscher auf eine sekundäre (binäre) Flüssigkeit (Arbeitsmedium) übertragen wird. Das Arbeitsmedium verdampft und wird in die Turbinen-/Generatoreinheit geleitet. Der Dampfdruck dieses Arbeitsmediums treibt die Turbinen **(I)** und die Generatoren **(II)** zur Stromerzeugung an. Das Arbeitsmedium kühlt aufgrund der Expansion in der Turbine ab und der Dampfdruck nimmt ab. Der Sog der Kühlanlagen bzw. Kondensatoren **(III)** führt zu einem Unterdruck von unter 1 bar. In den Kondensatoren **(III)** wird das Arbeitsmedium weiter abgekühlt und wieder verflüssigt, bevor es über eine Umlaufpumpe **(IV)** wieder in den Wärmetauscher eintritt. In einem binären Geothermiekraftwerk kommt das Geothermalwasser (Primärkreislauf) nicht mit dem Arbeitsmedium und der Turbinen-/Generatoreinheit (Sekundärkreislauf) in Kontakt. (https://orkustofnun.is/gogn/unu-gtp-report/UNU-GTP-2013-20.pdf, aufgerufen am 27.03.2020).

Das erfindungsgemäße Verfahren erlaubt die technische Integration der Nanofiltration und der Membrandestillation, ohne die Strom- und Wärmeproduktion im binären Geothermiekraftwerk signifikant einzuschränken, und greift ausschließlich auf Anlagen-interne technische und energetische Ressourcen zurück - das heißt, das Verfahren benötigt keine zusätzliche, von extern zuzuführende Energie und trägt einem geringen Platzbedarf Rechnung.

Der entscheidende Vorteil gegenüber dem Stand der Technik liegt in der Kreislauffähigkeit des erfindungsgemäßen Verfahrens, in der Nutzung des gesamten Volumenstroms unter weitgehender Vermeidung von unerwünschten chemischen Ausfällungen und der Nutzung der energetischen und technischen Randbedingungen von Geothermie-Anlagen, das heißt der Nutzung der Druckerhaltung und der im System befindlichen Wärme, ohne dabei den Betriebsablauf und gegebenenfalls die Stromproduktion einzuschränken. Dadurch wird eine minimalinvasive, wirtschaftliche sowie umweltfreundliche Gewinnung von Lithium-Ionen und anderen seltenen Alkalimetall-Ionen möglich.

In dem erfindungsgemäßen Verfahren wird in einem ersten Schritt das Geothermalwasser mit einer Temperatur von 120 °C - 180 °C, bevorzugt mit einer Temperatur von 135 - 180 °C, besonders bevorzugt mit einer Temperatur von 150 - 170 °C aus einer Produktionsbohrung **(1)** in einen Wärmetauscher **(2)** innerhalb eines binären Geothermiekraftwerks gepumpt. Das Geothermalwasser und das Arbeitsmedium, das bevorzugt einen Siedepunkt von < 40 °C hat, durchlaufen daraufhin den Wärmetauscher **(2).**

In dem erfindungsgemäßen Verfahren werden 100 % des Geothermalwassers nach Durchlaufen des Wärmetauschers **(2)** in mindestens ein Nanofiltrationsmodul (3) überführt.

Das erfindungsgemäße Verfahren umfasst in einem weiteren Schritt die weitgehende Abtrennung von Lithium-, Cäsium- und Rubidium-Ionen und anderen einwertigen Ionen von mehrwertigen Ionen in dem mindestens einen Nanofiltrationsmodul **(3)** nach Durchgang des Geothermalwassers durch den ersten Wärmetauscher **(2),** wobei die für Ausfällungen kritischen mehrwertigen Ionen (z.B. Ba²⁺, Ca²⁺, Pb²⁺, Cd²⁺, Fe²⁺, Mn²⁺, Sb³⁺, Ra²⁺, SO₄²⁻ u.a.) als Retentat (Konzentrat) abgetrennt werden und in das geothermische Reservoir **(11)** reinjiziert werden.

Die Nanofiltration ist ein druckgetriebenes Membranverfahren, in welchem Membranen eingesetzt werden, die definitionsgemäß Porengrößen von 0,1 - 10 nm aufweisen, was sie von gröberen Membranen, die in der Ultrafiltration und Mikrofiltration eingesetzt werden, und von feineren Membranen, die in der Umkehrosmose eingesetzt werden, unterscheidet (https://www.fiw.rwth-aachen.de/neo/fileadmin/pdf/membranbuch/D_Membranbuch_300106.pdf, aufgerufen am 18.02.2020).

In dem erfindungsgemäßen Verfahren wird für die Nanofiltration der Rohrleitungsdruck innerhalb des binären Geothermiekraftwerks genutzt. Der in den Rohrleitungen von binären Geothermiekraftwerken herrschende Wasserdruck im Primärkreislauf (Geothermalwasserkreislauf) wird in Abhängigkeit von der Wasserchemie neben Scaling-Inhibitoren (Inhibitoren von Mineralanlagerungen) üblicherweise verwendet, um Ausfällungen und Entgasungen während und nach dem Durchgang des Geothermalwassers durch den Wärmetauscher zu verhindern. Sanjuan *et al.* beschreiben die Wasserchemie von Geothermalwässern anhand der Analyse von Wasserproben aus dem Oberrheingraben (B. Sanjuan et al., Chemical Geology 2016, 428, 27-47).

Die signifikantesten Ausfällungen, die während und nach dem Durchgang des Geothermalwassers durch den Wärmetauscher in Abhängigkeit von der Wasserchemie erfolgen können, sind Ausfällungen von CaCO₃ (Calcit, Aragonit) von CaCO₃ • MgCO₃ (Dolomit), BaSO₄ (Baryt) und CaSO₄ (Anhydrit).

CaCO₃₋ und CaCO₃ • MgCO₃-Ausfällungen werden im erfindungsgemäßen Verfahren durch die Wahl entsprechend hoher Betriebsdrücke und -temperaturen weitestgehend verhindert (S. Speil, Masterarbeit der Studienrichtung Erdwissenschaften an der Technischen Universität Graz 2018, https://diglib.tugraz.at/download.php?id=5aaa6e3ba95bf&locati on=browse, aufgerufen am 05.11.2020).

In einer bestimmten Ausführungsform des erfindungsgemäßen Verfahrens werden BaSO₄- und CaSO₄-Ausfällungen verhindert, indem dem Geothermalwasser vor dem Eintritt in den Wärmetauscher **(2)** Scaling-Inhibitoren zugesetzt werden. Geeignete Scaling-Inhibitoren sind Organophosphate, wie z. B. Diethylentriaminpenta(methylenphosphonsäure), 1-Hydroxyethan-(1,1-diphosphonsäure), Aminotrimethylenphosphonsäure oder Ethylendiamintetra(methylenphosphonsäure), die die Ba²⁺- bzw. Ca²⁺-Ionen von den Sulfat-Ionen durch Komplexierung abschirmen, so dass diese nicht miteinander reagieren können. Zusätzlich verhindern sie das Kristallwachstum der BaSO₄- bzw. CaSO₄-Kristalle (J. Schreiber et al., PROCEEDINGS, Thirty-Eighth Workshop on Geothermal Reservoir Engineering Stanford University, Stanford, California, February 24-26, 2014 SGP-TR-202, https://pangea.stanford.edu/ERE/pdf/IGAstandard/SGW/- 2014/Scheiber.pdf, aufgerufen am 05.11.2020; Masterarbeit C. Otten, Fachbereich Ingenieur- und Naturwissenschaften, Hochschule Merseburg 2019, https://opendata.uni-halle.de/bitstream/1981185920/14189/1/OttenChristoph_Charakte risierung_eines_organischen_Scalinginhibitors.pdf, aufgerufen am 05.11.2020).

Auch Polycarbonsäuren, wie Polymaleinsäure, Polyacrylsäure oder Polymethacrylsäure, sind als Scaling-Inhibitoren geeignet.

Organophosphate und Polycarbonsäuren gehören zu den sogenannten "Threshold Inhibitoren", da sie in unterstöchiometrischen Mengen, typischerweise in Konzentrationen von 1 - 50 ppm, eingesetzt werden können (M. Mpelwa et al., Petroleum Science 2019, 16, 830-849; J. Zotzmann et al., Geotherm Energy 2018, 6, 18).

Organophosphate und Polycarbonsäuren wirken auch als Korrosionsinhibitoren und verhindern somit die Korrosion in den Rohrleitungen des Geothermalwasserkreislaufs (https://www.irohedp.com/best-organic-phosphonic-antiscaleand-corrosion-inhibitor/, aufgerufen am 05.11.2020; D. E. Arthur et al., Int. J. Ind. Chem. 2013, 4, 2).

Weitere geeignete Korrosionsinhibitoren sind, wie in der US9688903B2 beschrieben, Etherverbindungen, wie Ethylenglycolmonobutylether oder Ethylenglycolmonopropylether, quartäre Ammoniumverbindungen, wie Benzyldimethyldodecylammoniumchlorid oder Benzyldimethyltetradecylammoniumchlorid, und Kondensate von Fettsäureaminen. In der US9688903B2 werden diese Korrosionsinhibitoren in einer Konzentration von etwa 1 ppm bis etwa 100 ppm zugegeben.

Entgasungen (CO₂-Austritt) müssen während des Durchgangs des Geothermalwassers durch den Wärmetauscher verhindert werden, da ansonsten die Wärmeübertragung im Wärmetauscher ineffizient ist bzw. verhindert wird und es dazu noch zu CaCO₃-Ausfällungen in allen Anlagenteilen des Thermalwasserkreislaufs kommen kann.

Im erfindungsgemäßen Verfahren wird der Wasserdruck in den Rohrleitungen durch eine Förderpumpe aufgebaut und beträgt 15 - 35 bar. Unter den im erfindungsgemäßen Verfahren gegebenen Druck- und Temperaturverhältnissen ist im erfindungsgemäßen Verfahren weder eine Ausfällung von CaCO₃ noch ein Austritt von CO₂ aus dem Geothermalwasser zu erwarten.

In einer bevorzugten Ausführung beträgt der Wasserdruck in den Rohrleitungen 20 - 25 bar. Durch zusätzliche Pumpen bzw. durch Erhöhung der Pumpenleistung der Förderpumpe werden die Drücke bedarfsweise auf ≤ 35 bar erhöht. Die Druckhaltung ist einerseits nötig, um das heiße Geothermalwasser (> 120 °C) als flüssige Phase zu fördern und gleichzeitig andere Gase - insbesondere das CO₂ - im Wasser gelöst zu belassen. Der Druck hängt deshalb vor allem von den thermodynamischen Randbedingungen ab (https://www.internetchemie.info/chemielexikon/daten/w/was-serdampfdruck.php, aufgerufen am 18.03.2020). Für z.B. 160 - 170 °C heißes Geothermalwasser reichen 6 - 8 bar aus, um es als flüssige Phase zu fördern. Um bei diesen Temperaturen und den im Geothermalwasser vorliegenden Salinitäten das CO₂ im Geothermalwasser gelöst zu belassen, braucht man allerdings Drücke ≥ 20 bar.

Nanofiltrationsmembranen können im Wasser gelöste Ionen und andere gelöste Substanzen, beispielsweise niedermolekulare Verbindungen, zurückhalten. Besonders interessant bei Nanofiltrationsmembranen ist ihre Fähigkeit, einwertige von mehrwertigen Ionen weitestgehend zu trennen. Gründe dafür sind Wechselwirkungen zwischen den Ionen und dem Membranmaterial der Membran und die verschiedenen Hydratationsradii der Ionen. Der Radius eines hydratisierten Ions ist maßgebend für die Durchlässigkeit von Ionen und für den damit verbundenen Ionenrückhalt von Nanofiltrationsmembranen (B. Tansel et al., Separation and Purification Technology 2006, 51, 1, 40-47). Die Hydratationshülle von Ionen hängt von der Ladung der Ionen, von der Anwesenheit anderer Ionen in der Lösung und vom Kristallradius ab (F. David et al., Journal of Molecular Liquids 2001, 90, 1, 45-62). Trotz kleinerer Ionenradien (Kristallradius) zeigen zweiwertige Kationen (z.B. Magnesium-Ionen) einen größeren Hydratationsradius als einwertige Kationen (z.B. Lithium-Ionen) und werden deswegen von der Nanofiltrationsmembran besser abgetrennt.

Die negativen Ladungen in den Poren und auf der Oberfläche der Nanofiltrationsmembran sind unbeweglich, sie werden jedoch durch freie positive einwertige Ionen, wie z.B. Na⁺ und K⁺, in der Feed-Lösung abgeschirmt und es kommt zur Ausbildung einer elektrischen Doppelschicht an der Porenwand. Wird die Konzentration an Salzen in der Feed-Lösung erhöht, werden die negativen Fest-Ionen in der Membran noch stärker abgeschirmt und es wird auch für einwertige Anionen möglich, die Membran zu passieren. Mehrwertige Kationen gelangen im Vergleich zu den einwertigen Ionen kaum in die Poren der Membran und werden größtenteils zurückgehalten.

Eine weitere Eigenschaft der Nanofiltrationsmembranen ist der Donnan-Effekt, welcher ebenfalls auf eine Konzentrationsabhängigkeit des Ionenrückhalts zurückzuführen ist (A. E. Childress et al., Environmental Science & Technology 2000, 34, 17, 3710-3716; T. Melin and R. Rautenbach, Membranverfahren: Grundlagen der Modul- und Anlagenauslegung (2007), Springer-Verlag Berlin, Heidelberg). Weiterhin spielen bei dem Transport von Ionen durch die Nanofiltrationsmembran weitere Mechanismen, wie zum Beispiel Siebeffekte oder die Diffusion in der Membran und in der Lösung, eine Rolle. Siebeffekte entstehen durch einen konvektiven Transport von Ionen durch die Membran als Resultat der Druckdifferenz zwischen beiden Seiten der Membran und sind abhängig von der Porengrößenverteilung der Membran. Eine Diffusion von Ionen durch die Membran findet aufgrund von Konzentrationspotentialgradienten statt (https://www.fiw.rwth-aachen.de/neo/fileadmin/pdf/membranbuch/D_Membranbuch _300106.pdf, aufgerufen am 18.02.2020).

Bedingt durch die hohen Ionen-Konzentrationen (~ 1,5 mol/l) in geothermischen Wässern herrschen sehr hohe osmotische Drücke (>> 40 bar) vor, die eine Anwendung von alternativen dichteren Membranen (z.B. Umkehrosmose-Membranen) einschränken.

Die hohen Salinitäten in den geothermischen Wässern werden hauptsächlich durch Natrium- und Chlorid-Ionen verursacht. Natrium- und Chlorid-Ionen permeieren allerdings sehr gut durch die Nanofiltrationsmembran. Damit ist der effektive osmotische Druck, der bei der Nanofiltration überwunden werden muss, deutlich geringer.

Im erfindungsgemäßen Verfahren durchfließen einwertige Ionen, wie Lithium-, Cäsium- und Rubidium-Ionen, die verwendete Nanofiltrationsmembran zu mehr als 80 %, wogegen die mehrwertigen Ionen, wie zum Beispiel Mg²⁺- und Ba²⁺-Ionen, zu mehr als 80 % zurückgehalten werden.

Die Membranpermeabilität nimmt mit zunehmender Temperatur aufgrund der exponentiellen Temperatur-Abhängigkeit der Viskosität des Wassers nach der Arrhenius-Andrade-Gleichung zu (E. N. da C. Andrade, London Edinb. Dub. Philos. Mag. J. Sci. 1934, 17, 112, 497-511). Höhere Temperaturen begünstigen somit die Extraktion von Alkalimetall-Ionen, wie Lithium-, Cäsium- und Rubidium-Ionen, dahingehend, dass bei höheren Temperaturen eine geringere Gesamtfläche der Nanofiltrationsmembranmodule benötigt wird. Nach dem Durchgang durch den ersten Wärmetauscher (2) beträgt die Temperatur des Geothermalwassers in Abhängigkeit von der vorherrschenden Außentemperatur 50 °C - 75 °C, in Ausnahmefällen extremer Außentemperaturen (> 35 °C) auch bis zu 80 °C.

Die im erfindungsgemäßen Verfahren verwendete Nanofiltrations-membran ist eine Polymermembran oder eine Keramikmembran mit einer Porengröße von 0,1 nm - 10 nm, einer Druckbeständigkeit bis 55 bar und einer Temperaturbeständigkeit bis 80 °C.

Bevorzugt ist die Verwendung einer asymmetrischen Polymer-Nanofiltrationsmembran bestehend aus einer aktiven Schicht aus Polyamid und einer porösen Stützschicht aus Polysulfon.

Besonders bevorzugt ist die Verwendung einer Nanofiltrationsmembran NF245 (DuPont) mit einer Druckbeständigkeit bis 54,8 bar bei 45 °C und bis 27,5 bar bei 70 °C und eine Temperaturbeständigkeit bis maximal 70 °C. Diese Membran besitzt eine 0,3 - 3 µm dicke aktive Schicht aus Polyamid und eine poröse Stützschicht aus Polysulfon. Die Membran NF245 hält organische Substanzen mit einer Molmasse > 300 g/mol zurück und ermöglicht gleichzeitig eine erhöhte Durchlässigkeit von einwertigen Ionen.

Im erfindungsgemäßen Verfahren werden in einer bestimmten Ausgestaltung die Nanofiltrationsmembranen technisch zu einer anschlussfähigen Einheit, einem Flachkanalmodul, angeordnet. Die Strömungsverhältnisse in den Flachkanalmodulen ähneln denen in kommerziell verfügbaren Wickelmodulen. Wickelmodule selbst bestehen aus flachen Membranen, die in mehreren Schichten übereinandergestapelt sind, durch ein Netzgitter (Spacer) voneinander getrennt werden und um ein perforiertes Zentralrohr aufgewickelt sind.

In einer anderen Ausführungsform werden für die Nanofiltration in dem erfindungsgemäßen Verfahren auch rohrförmige Membranen in Rohr- oder Hohlfasermodulen verwendet (https://www.fiw.rwth-aachen.de/neo/fileadmin/pdf/membranbuch /D_Membranbuch_300106.pdf, aufgerufen am 18.02.2020).

In dem erfindungsgemäßen Verfahren besteht die Nanofiltrationseinheit in einer Ausgestaltung aus einem und in einer anderen Ausgestaltung aus mehreren Nanofiltrationsmodulen **(3).**

Die Druckverluste auf der Retentatseite der Nanofiltrations-membran werden geringgehalten, sodass das Retentat wieder über die mindestens eine Reinjektionsbohrung **(4)** ins geothermische Reservoir **(11)** reinjiziert werden kann.

Das Permeat der Nanofiltration aus Schritt D) wird in eine Ausfällungseinheit **(5a** oder **5b)** zur Ausfällung zweiwertigen Erdalkali-Ionen überführt.

In einem weiteren Schritt des erfindungsgemäßen Verfahrens werden die noch vorhandenen geringen Konzentrationen an zweiwertigen Erdalkali-Ionen, wie zum Beispiel Mg²⁺-, Ca²⁺-, Sr²⁺- und Ba²⁺-Ionen, aus dem Permeat der Nanofiltration in der Ausfällungseinheit **(5a** oder **5b)** ausgefällt und abfiltriert. Aufgrund der geringen Löslichkeitsprodukte von Erdalkalicarbonaten und Erdalkalihydroxiden im Vergleich zu den Löslichkeitsprodukten der Alkalicarbonate und Alkalihydroxiden ist die chemische Ausfällung der Erdalkali-Ionen als Carbonate oder Hydroxide bevorzugt. Das Permeat ist nach der Nanofiltration an mehrwertigen Ionen abgereichert.

Auf der Permeatseite herrschen im erfindungsgemäßen Verfahren atmosphärische Druckverhältnisse vor, sodass das Permeat mit Hilfe einer Umwälzpumpe **(6a** oder **6b)** zu einer weiteren Prozessstufe transportiert wird. Das Permeat durchläuft einen zweiten Wärmetauscher **(7a** oder **7b),** und unter Aufnahme von Wärmeenergie wird die Temperatur des Permeats auf bis zu 85 °C erhöht.

In einem weiteren Schritt des erfindungsgemäßen Verfahrens wird das Permeat durch eine Membrandestillation **(8)** aufkonzentriert.

Die Membrandestillation ist ein thermisch getriebenes Membranverfahren, das bei Temperaturen von maximal 85 °C und einer Temperaturdifferenz ≥ 15 K einen Entzug von Wasser und anderen flüchtigen Stoffen aus einer Lösung ermöglicht. Bei der Membrandestillation dient eine hydrophobe, mikroporöse Membran als Barriere, um den Kontakt zwischen warmer und kalter Seite zu vermeiden und um den Übertritt von Wasserdampf zu ermöglichen (Smolders et al., Desalination 1989, 72, 249-262).

Aufgrund der hydrophoben Eigenschaften der Membran kann flüssiges Wasser nicht in die Poren der Membran eindringen, während Wasserdampfmoleküle leicht passieren können. Bei einem ausreichenden Temperaturgradienten zwischen Rohwasser- und Produktstrom bildet sich eine Wasserdampfpartialdruckdifferenz über die Membran aus, die als Triebkraft für die Permeation von Wasserdampfmolekülen durch die Membran einen Transfer von Wasser aus dem Rohwasserstrom zum Produktstrom ermöglicht. Der Rohwasserstrom wird durch den Wasserentzug aufkonzentriert, der Wasserdampf wird im kälteren Produktstrom kondensiert (Alkhudhiri et al., Desalination 2012, 287, 2-18).

Im erfindungsgemäßen Verfahren wird bevorzugt eine Direktkontakt-Membrandestillation, eine Air-Gap-Membran-destillation oder eine Vakuum-Membrandestillation verwendet (D. Winter et al., Journal of Membrane Science 2011, 375, 1-2, 104-112).

Im erfindungsgemäßen Verfahren wird die Membrandestillation unter Normaldruck und einer Temperatur von 65 °C - 85 °C durchgeführt.

Besonders bevorzugt ist eine Direktkontakt-Membran-destillation. Beim Direktkontakt-Membrandestillationsverfahren sind beide Seiten der Membran mit Flüssigkeit beaufschlagt. Auf der ersten Seite, der Verdampferseite, befindet sich das heiße Speisewasser, während sich auf der zweiten Seite gekühltes Permeat befindet. Die Kondensation des durch die Membran hindurch permeierenden Dampfes findet direkt in der flüssigen Phase an der Membrangrenzschicht statt. Da in diesem Fall nur die Membran als Hindernis dem Stofftransport entgegensteht, werden hier relativ hohe flächenspezifische Permeatströme erreicht (B. B. Ashoor et al., Desalination 2016, Volume 398, 222-246).

In dem erfindungsgemäßen Verfahren werden in einer bestimmten Ausführungsform einzelne Membrandestillationsmodule zusammengeschaltet, sodass sie an die jeweiligen Randbedingungen - insbesondere die Fließraten - in einem binären Geothermiekraftwerk angepasst werden können.

Der Membrandestillation schließen sich im erfindungsgemäßen Verfahren weitere Verfahren zur Lithiumabtrennung in einer Abtrennungseinheit **(9)** an. Trennverfahren sind beispielsweise Ausfällung, Ionentauscher, Absorptionsverfahren, Flüssig-Flüssigextraktion oder Elektrodialyse.

Bevorzugt ist die Abtrennung von Lithium-Ionen durch Ausfällung. Besonders bevorzugt werden Lithium-Ionen in der durch Membran-destillation angereicherten Salzlösung durch Zugabe von Na₂CO₃ als Lithiumcarbonat (Li₂CO₃) oder durch Zugabe von Natriumphosphat (Na₃PO₄) als Lithiumphosphat (Li₃PO₄) chemisch ausgefällt.

Lithiumcarbonat weist ein inverses Löslichkeitsverhalten auf, sodass Lithiumcarbonat bei höheren Temperaturen effizienter als bei niedrigen Temperaturen präzipitiert werden kann (U. Wietelmann and R. J. Bauer, Ullmann's Encyclopedia of Industrial Chemistry, 6th ed., 2002, 339-366, Weinheim: Wiley-VCH).

Das chemisch ausgefällte Lithiumcarbonat bzw. Lithiumphosphat wird im erfindungsgemäßen Verfahren beispielsweise durch Filtration oder Zentrifugation abgetrennt.

In einer bestimmten Ausführungsform wird die Restlösung nach der Lithium-Ionen-Abtrennung in Schritt J) zur Gewinnung von Rubidium-Ionen und Cäsium-Ionen in einer Abtrennungseinheit **(10)** weiterverarbeitet, indem beispielsweise die Cäsium-Ionen und Rubidium-Ionen enthaltende wässrige Lösung weiter aufkonzentriert wird.

Die nach der Abtrennung von Lithium-Ionen und gegebenenfalls von Cäsium- und Rubidium-Ionen verbleibende Restlösung wird über die mindestens eine Reinjektionsbohrung **(4)** in das geothermische Reservoir **(11)** reinjiziert.

Als Nebenprodukt der Membrandestillation entsteht deionisiertes Wasser, welches entweder wieder ins Reservoir reinjiziert wird oder für Anlagen-interne, technische Zwecke oder kommerziell als Nebenprodukt genutzt wird.

Die Erfindung wird anhand der folgenden Figuren, Ausführungsbeispiele und Beschreibungen näher erläutert. Alle dargestellten Merkmale und deren Kombinationen sind nicht nur auf diese Figuren und Ausführungsbeispiele und deren Ausgestaltungen begrenzt. Vielmehr sollen diese stellvertretend für weitere mögliche, aber nicht explizit als Ausführungsbeispiele dargestellte weitere Ausgestaltungen kombinierbar angesehen werden.

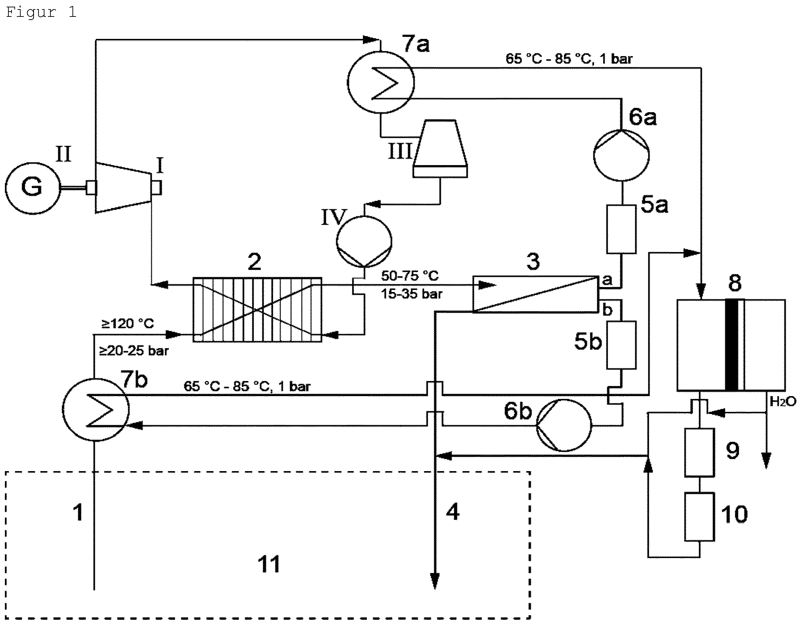

Figur 1 beschreibt ein Fließschema des integrierten, kreislauffähigen Alkalimetall-Ionen-Extraktionsverfahrens in einem binären Geothermiekraftwerk. Aus einer Produktionsbohrung **(1)** wird Geothermalwasser (120 °C - 180 °C) aus einem geothermischen Reservoir **(11)** unter einem Druck von größer 20 bar in einen ersten Wärmetauscher **(2)** gepumpt. Im Wärmetauscher **(2)** wird das Arbeitsmedium des Geothermiekraftwerkes erwärmt und das Geothermiewasser auf 50 °C - 75 °C abgekühlt. Das Arbeitsmedium wird nun zum Antrieb der Turbine **(I)** und des Generators **(II)** verwendet.

Das Arbeitsmedium kühlt aufgrund der Expansion in der Turbine ab und der Dampfdruck nimmt ab. Das Arbeitsmedium durchläuft daraufhin die Kondensatoren (**III**), wird weiter abgekühlt und wieder verflüssigt. In einer bestimmten Ausführungsform durchläuft das Arbeitsmedium den Wärmetauscher **(7a),** bevor es die Kondensatoren **(III)** durchläuft.

Über eine Umlaufpumpe (**I**V) tritt das Arbeitsmedium wieder in den Wärmetauscher **(2)** ein.

Unter Aufrechterhaltung des Druckes werden 100 % des Geothermalwassers dem mindestens einem Nanofiltrationsmodul **(3)** zugeführt.

Das Retentat aus dem Nanofiltrationsmodul wird über die mindestens eine Reinjektionsbohrung **(4)** in das geothermische Reservoir **(11)** zurückgeführt.

Aus dem Permeat der Nanofiltration **(a** oder **b)** werden die noch vorhandenen zweiwertigen Erdalkali-Ionen in einer Ausfällungseinheit **(5a** oder **5b)** ausgefällt.

Das an zweiwertigen Ionen abgereicherte Permeat der Nanofiltration wird mit Hilfe einer Umwälzpumpe **(6a** oder **6b)** in einen zweiten Wärmetauscher **(7a** oder **7b)** überführt, der sich - je nach Wärmebedarf - entweder zwischen der Turbinen-/Generatoreinheit **(I, II**) und den Kondensatoren **(III)** oder zwischen Produktionsbohrung (1) und erstem Wärmetauscher **(2)** befindet.

Vom Wärmetauscher **(7a** oder **7b)** gelangt das Permeat in das Membrandestillationsmodul **(8).** Aus dem Membrandestillationsmodul **(8)** wird die Salzlösung einem Lithium-Abtrennungsprozess in einer Abtrennungseinheit **(9)** zugeführt, und die Restlösung wird in einer bestimmten Ausführungsform weiter für die Gewinnung von Rubidium-Ionen und Cäsium-Ionen in einer Abtrennungseinheit **(10)** genutzt. Die nach der Abtrennung von Alkalimetall-Ionen verbleibende Restlösung wird über die mindestens eine Reinjektionsbohrung **(4)** in das geothermische Reservoir **(11)** zurückgeführt.

Das bei der Membrandestillation entstehende deionisierte Wasser kann entweder über eine Leitung der mindestens einen Reinjektionsbohrung **(4)** zugeführt werden oder für andere Zwecke verwendet werden.

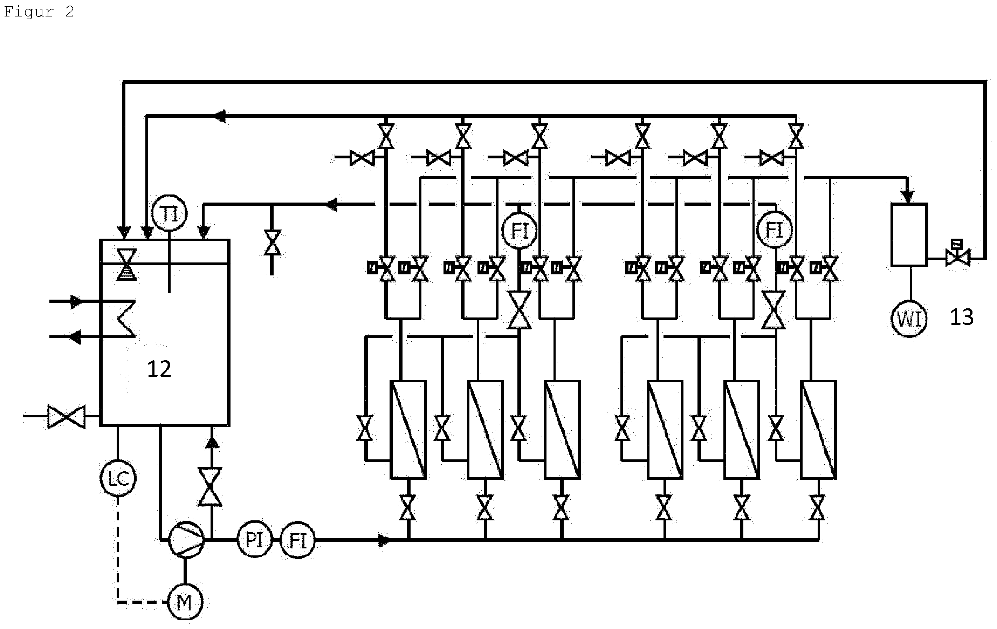

Figur 2 beschreibt eine Flachkanalzellenanlage und ist Stand der Technik aus https://publikationen.bibliothek.kit.edu/ 1000029879, DOI: 10.5445/IR/1000029879, aufgerufen am 17.03.2020.

Aus einem Vorlagebehälter **(12)** mit einem Fassungsvermögen von circa 250 l wird das Wasser kontinuierlich mit einer Kreiselpumpe (M) auf Betriebsdruck gebracht (PI: Druckanzeige) und gelangt schließlich in die sechs parallelgeschalteten Membranmodule. Im Vorlagetank sind eine Kontrolle des Flüssigkeitsstands (LC) und eine Temperaturanzeige (TI) angebracht.

Das Konzentrat aller Module wird wieder zusammengeführt und fließt zurück in den Tank. An dieser Rohrleitung befinden sich zwei Ventile (FI), die zur Einstellung des Volumenstroms verwendet werden, sowie eines, durch das eine Probe vom Konzentrat genommen werden kann.

Das Permeat von jeweils einem der Module wird zur Bestimmung des Flusses in einem Behälter, dessen Gewicht kontinuierlich durch eine Waage (WI) **(13)** bestimmt wird, aufgefangen. Um den Fluss aller Module zu erfassen, wird dieses zyklisch gewechselt. Das restliche Permeat wird über einen Schlauch aus der Anlage abgeleitet. Sechs Ventile ermöglichen die Entnahme von Permeatproben eines jeden einzelnen Moduls.

Ferner ermöglicht ein Bypass das schonende Anfahren der Pumpe und ein Ventil vor der Pumpe die Probenahme aus dem Tank.

Figur 3 veranschaulicht den Rückhalt (in %) von verschiedenen Ionen (Li⁺, Mg²⁺, Ba²⁺ und Cl⁻) und der elektrischen Leitfähigkeit durch zwei verschiedenen Membranen NF270 (DuPont) und NF245 (DuPont) bei einem Druck von 15 bar, einer Zulaufkonzentration von Lithium-Ionen von 200 mg/l Li⁺ und einer Temperatur 20 °C (siehe Beispiel 2, Lösung c).

Figur 4 veranschaulicht den Rückhalt (in %) von verschiedenen Ionen (Li⁺, Mg²⁺, Ba²⁺ und Cl⁻) und der elektrischen Leitfähigkeit durch zwei verschiedenen Membranen NF270 (DuPont) und NF245 (DuPont) bei einem Druck von 15 bar, einer Zulaufkonzentration von Lithium-Ionen von 100 mg/l, einer Zulaufkonzentration von Natrium-Ionen von 2000 mg/l und einer Temperatur 40 °C (siehe Beispiel 2, Lösung d).

Figur 5 veranschaulicht den Einfluss der Na⁺-Konzentration auf den Li⁺-Rückhalt (Membran NF245, Beispiel 3).

Figur 6 veranschaulicht den Einfluss der Na⁺-Konzentration auf den Mg²⁺-Rückhalt (Membran NF245, Beispiel 3).

Figur 7 beschreibt die Funktionsweise der Direktkontakt-Membrandestillation und ist Stand der Technik aus Bauer et al., Journal of Membrane Science 2019, 577, 145-152).

Der Versuchsaufbau der Membrandestillation besteht aus zwei, durch eine hydrophobe, mikroporöse Membran getrennten Kreisläufen. Im Kondensat-Kreislauf wird der Kondensat-Tank mit einem Thermostat auf eine Temperatur von 45 °C aufgeheizt.

Das Wasser wird mit Hilfe einer Zahnradpumpe zur DirektkontaktMembrandestillationszelle gepumpt. Im Feed-Kreislauf wird der Feed-Tank mit einem Thermostat auf eine Temperatur von 65 °C aufgeheizt. Das Wasser wird mit Hilfe einer Zahnradpumpe mit einem Saugschuhpumpkopf zur Direktkontakt-Membrandestillationszelle befördert.

Die Gewinnung von Lithium, Cäsium und Rubidium als Nebenprodukte innerhalb binärer Geothermiekraftwerke macht die geothermische Energiegewinnung wirtschaftlich deutlich ertragreicher.

Lithiumverbindungen finden beispielsweise Verwendung in Energiespeichern, in der Glas- und Keramikindustrie, in Spezial-Schmierstoffen, in Klimaanlagen, in der Metallbranche und der Pharmaindustrie.

Cäsiumverbindungen werden beispielsweise als Szintillationsmaterialen in Szintillationszählern, als Elektrolyte in galvanischen Zellen, zur Herstellung von Dichte-Gradienten bei der Ultrazentrifugentrennung, als Fenster und Prismen für die IR- und FIR-Spektroskopie, als Dotierstoffe in Vanadium-Katalysatoren und als Basen in der organischen Chemie eingesetzt.

Rubidiumverbindungen finden Verwendung als Katalysatoren, Elektrolyte für Akkumulatoren, zur Herstellung von Spezialgläsern, als Schmerz- und Beruhigungsmittel sowie als Antidepressiva und als starke Basen in der organischen Chemie.

Cäsium- und Rubidiumverbindungen finden weiterhin Verwendung in der Laser- und Vakuumtechnologie.

Deionisiertes Wasser als Nebenprodukt der Membrandestillation kann für etwaige technische Zwecke in der Geothermie-Anlage selbst verwendet bzw. kommerziell vertrieben werden.

### Beispiele

### Material und Methoden

### Membranexperimente:

Experimente zur Nanofiltration von Lithium-Ionen wurden mit einer Flachkanalzellenanlage (Figur 2) durchgeführt. Aus einem Vorratsbehälter mit einem Fassungsvermögen von circa 150 Liter wurde Wasser kontinuierlich mit einer Kreiselpumpe auf Betriebsdruck gebracht und gelangte daraufhin in sechs parallelgeschaltete Membranmodule. Die Strömungsverhältnisse in den Membranmodulen ähnelten denen in einem kommerziell verfügbaren Wickelmodul.

Die Ergebnisse der Filtration mit der Flachkanalzellenanlage dienten der Auswahl einer Membran für die nachfolgenden Experimente mit erhöhten Salzkonzentrationen.

Für die Experimente mit erhöhten Salzkonzentrationen wurden Rührzellen des HP4750 Modells der Firma STERLITECH^{™} verwendet. Die Rührzellen waren mit einer Rühreinheit versehen, dabei wurde ein Rührer mit Hilfe eines externen magnetischen Antriebs und ein Rührer mit einem elektrischen Motor unterhalb der Zelle angetrieben. Das Fassungsvermögen der Zellen betrug 300 ml. Die effektive Membranfläche in der Zelle war 14,6 cm².

Bei den Experimenten wurden zwei verschiedene Membranen der Firma DuPont aus Polyamid mit einer Stützschicht aus Polysulfon eingesetzt: NF270 mit einem Salzrückhalt von > 97 %, einer maximalen Druckbelastbarkeit von 41 bar und einer maximalen Temperaturbelastbarkeit von 45 °C und NF245 mit einem Salzrückhalt von > 98,5 %, einer maximalen Druckbelastbarkeit von 54,8 bar bei 45 °C und 27,5 bar bei 70 °C und einer Temperaturbeständigkeit bis maximal 70 °C.

Der Salzrückhalt wurde jeweils mit einer Lösung von 2000 ppm MgSO₄ bei 25 °C und 15 % Ausbeute bei 4,8 bar bestimmt (https://www.dupont.com/content/dam/dupont/amer/us/en/watersolutions/public/documents/en/45-D00719-en.pdf, aufgerufen am 21.02.2020).

### Membrandestillation:

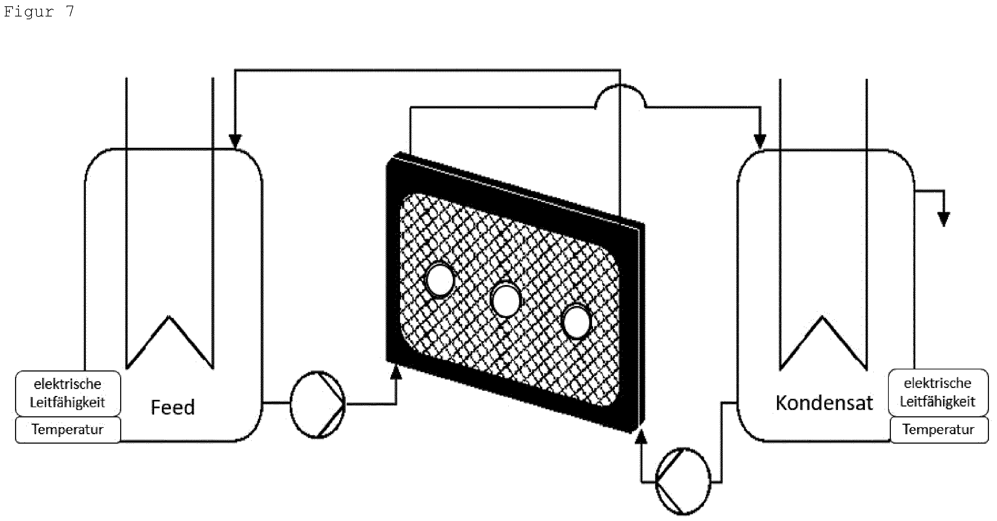

Der Versuchsaufbau der Membrandestillation besteht aus zwei, durch eine hydrophobe, mikroporöse Membran getrennte Kreisläufen (Figur 7). In dem Kondensat-Kreislauf wird der Kondensat-Tank mit einem Thermostat (Julabo, F25-HE) auf eine Temperatur von 45 °C aufgeheizt. Das Wasser wird mit Hilfe einer Zahnradpumpe (Ismatec, MCP-Z Standard) mit einem Cavity-Style-Pumpkopf (Ismatec, Z-130) zur Direktkontaktmembrandestillationszelle gepumpt.

Im Feed-Kreislauf wird der Feed-Tank mit einem Thermostat (Julabo, F34-He) auf eine Temperatur von 65 °C aufgeheizt. Das Wasser wird mit Hilfe einer Zahnradpumpe (Ismatec, MCP-Z Standard) mit einem Saugschuhpumpkopf (Ismatec, Z-201) zur Direktkontaktmembrandestillationszelle befördert. Der Pumpenkopf ist speziell für höhere Temperaturen bis 177 °C ausgelegt (Bauer et al., Journal of Membrane Science 2019, 577, 145 - 152).

### ICP-OES zur Kationenanalyse:

Die chemischen Analysen zur Ermittlung des Permeatverhaltens der Nanofiltrations-Membran in den unterschiedlichen Experimenten wurden mit einer ICP-OES vom Typ Varian 715-ES mit einem radialen induktiv gekoppelten Plasma als Anregungsquelle und einem CCD-Simultandetektor mit Echelle-Gitter mit einem Autosampler zur Analyse größerer Probenmengen durchgeführt. Die Messgenauigkeit variierte - abhängig vom zu analysierenden Element - von 5 µg/l bis 500 µg/l.

Von allen Experimenten wurden sowohl die Feedlösungen als auch die Permeatlösungen gemessen. Die Feedlösungen wurden zur Kontrolle gemessen, da es bei der Ansetzung der Lösungen zu geringen Abweichungen (Einwaage, Wasservolumen, Hygroskopie) von der geplanten Konzentration kommen kann. Alle Proben mit Na⁺ < 2 g/l wurden im Verhältnis 1:10 verdünnt und alle Ionen wurden gleichzeitig gemessen. Für Proben mit 2 g/l < Na⁺ < 35 g/l wurden zwei Messungen durchgeführt. Die erste Messung der Ionen Li⁺, Ba²⁺, Mg²⁺ erfolgte an einer im Verhältnis von 1:10 verdünnten Probe. Die Messung der Na⁺-Konzentration erfolgte an einer im Verhältnis 1:100 verdünnten Probe. Für Na⁺ = 35 g/l wurde die Na⁺-Konzentration in einer im Verhältnis 1:1000 verdünnten Lösung gemessen. Die anderen Ionen wurden wieder in einer auf 1:10 verdünnten Lösung gemessen. Alle Messlösungen wurden mit 1%iger HNO₃ versetzt.

Ionenchromatographie zur Bestimmung der Anionenkonzentrationen:
Die Konzentration der Cl-Ionen wurden mit einer Ionenchromatographie vom Typ Metrohm 790 Personal IC durchgeführt, um die Ladungsneutralität zu überprüfen und um Massenbilanzrechnungen durchführen zu können. Für die Messungen wurden die Proben im Verhältnis 1:50 verdünnt und die Cl-Konzentration in Metrosep A Supp 5 Säulen mit Fließraten von 0,8 ml/min gemessen.

### pH-Wert und elektr. Leitfähigkeitsbestimmungen:

Vor, während und nach den Versuchsdurchführungen wurden begleitend pH-Werte und elektrische Leitfähigkeiten gemessen.

### Beispiel 1:

### Experimente zur Charakterisierung des Li-Rückhalts

Membran-Anlage: Flachkanalzellenanlage (Figur 2), Querstrom-Verfahren (cross flow)
Modelllösungen (die Mengenangaben beziehen sich auf 1 Liter Wasser)
   a. 100 mg Li⁺ - gelöst als Chlorid.
   b. 150 mg Li⁺ - gelöst als Chlorid.
   c. 200 mg Li⁺ - gelöst als Chlorid.
Temperatur: 20 °C und 40 °C
Druck: 7,5 bar und 15 bar

Alle Experimente wurden bei einer Überströmungsgeschwindigkeit von 0,22 m/s durchgeführt. Bei jedem einzelnen Experiment wurden mindestens zwei Module der Flachkanalzellenanlage mit ein und derselben Membran bestückt und getestet (Duplikatmessung).

Die Ergebnisse der Nanofiltration mit der Flachkanalzellenanlage dienten der Auswahl einer Membran für die Experimente in den Beispielen 2 und 3 mit erhöhten Salzkonzentrationen.

### Beispiel 2:

### Experimente zur Charakterisierung des Li-Rückhalts in Anwesenheit weiterer Ionen:

Membran-Anlage: Flachkanalzellenanlage (Figur 2), Querstrom-Verfahren (cross flow)
Modelllösungen (die Mengenangaben beziehen sich auf 1 Liter Wasser):
   a. 100 mg Li⁺, 10 mg Ba²⁺, 400 mg Mg²⁺ - gelöst als Chlorid.
   b. 150 mg Li⁺, 10 mg Ba²⁺, 400 mg Mg²⁺ - gelöst als Chlorid.
   c. 200 mg Li⁺, 10 mg Ba²⁺, 400 mg Mg²⁺ - gelöst als Chlorid.
   d. 100 mg Li⁺, 10 mg Ba²⁺, 400 mg Mg²⁺, 2000 mg Na⁺ - gelöst als Chlorid.
   e. 150 mg Li⁺, 10 mg Ba²⁺, 400 mg Mg²⁺, 2000 mg Na⁺ - gelöst als Chlorid.
   f. 200 mg Li⁺, 10 mg Ba²⁺, 400 mg Mg²⁺, 2000 mg Na⁺ - gelöst als Chlorid.
Temperatur: 20 °C und 40 °C
Druck: 7,5 bar und 15 bar

Alle Experimente wurden bei einer Überströmungsgeschwindigkeit von 0,22 m/s durchgeführt. Bei jedem einzelnen Experiment wurden mindestens zwei Module der Flachkanalzellenanlage mit ein und derselben Membran bestückt und getestet (Duplikatmessung).

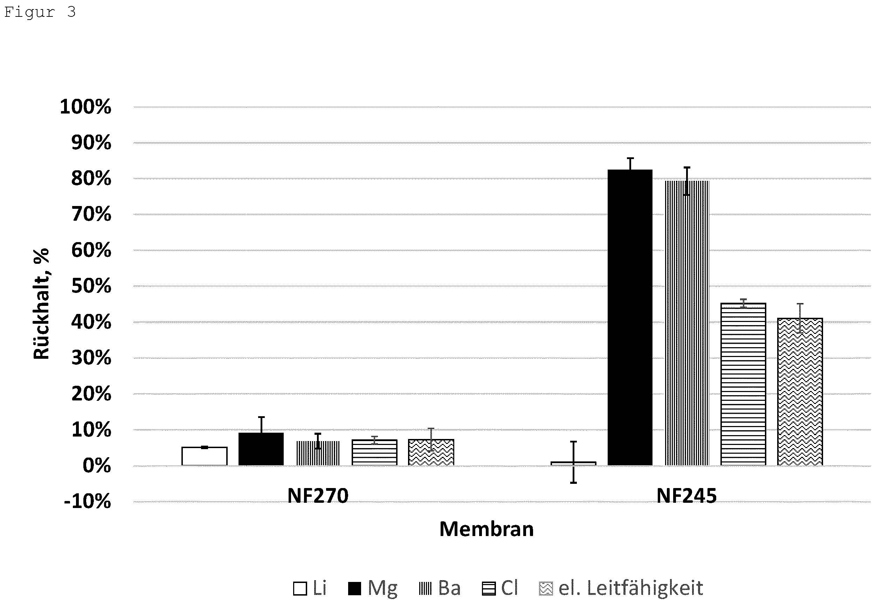

Figur 3 veranschaulicht den Rückhalt (in %) von verschiedenen Ionen (Li⁺, Mg²⁺, Ba²⁺ und Cl⁻) durch die Membranen NF270 (DuPont) und NF245 (DuPont) bei einem Druck von 15 bar, einer Zulaufkonzentration von Lithium-Ionen von 200 mg/l und einer Temperatur von 20 °C (siehe Beispiel 2, Lösung c).

In Figur 3 zeigt die Membran NF270 einen Rückhalt von ca. 8 % für alle gemessenen Ionen, weitestgehend unabhängig von Ladung und Größe des Ions. Im Gegensatz dazu zeigt die Membran NF245 deutliche Unterschiede zwischen den Rückhalten verschiedener Ionen: Magnesium und Barium als zweiwertige Kationen werden stärker zurückgehalten (ca. 80 %) als das einwertige Lithium (ca. 10 %).

Weiterhin wurde festgestellt, dass die Temperatur wenig Einfluss auf den Rückhalt der Ionen hatte. Eine Temperaturerhöhung wirkt sich im Wesentlichen auf die Viskosität des Wassers und damit auf die Permeabilität der Membran aus.

Der Rückhalt von Ionen wird außerdem von der Membranladung beeinflusst. Die in der Oberfläche enthaltenen organischen Amide geben der Membran eine einfache negative Ladung, welche dafür sorgt, dass die Anionen abgestoßen und gleichzeitig besser zurückgehalten werden. Die Chlorid-Ionen werden deshalb von der NF245 Membran zu ca. 45 % zurückgehalten.

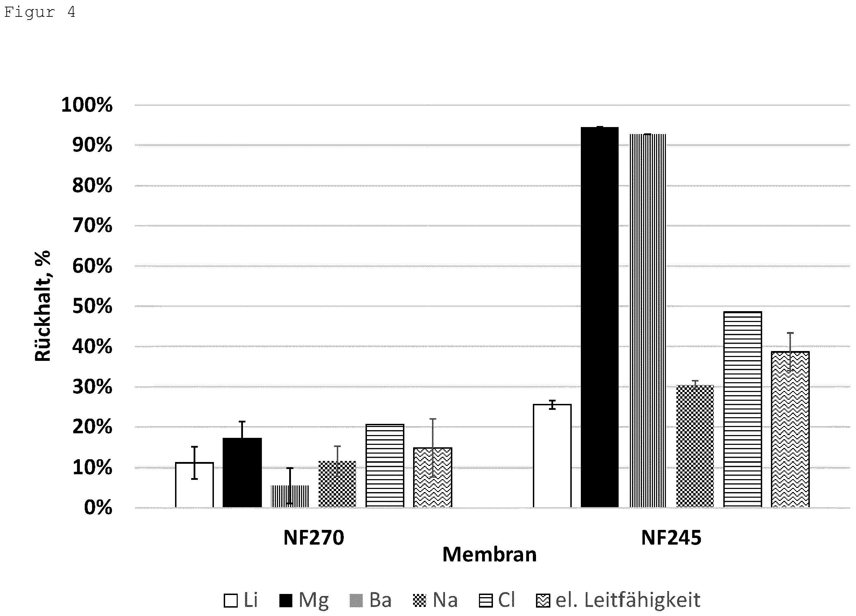

Der Einfluss weiterer Ionen auf den Rückhalt von Lithium ist in Figur 4 dargestellt. Hierzu wurde der Lösung NaCl zugegeben.

Figur 4 veranschaulicht den Rückhalt (in %) von verschiedenen Ionen (Li⁺, Mg²⁺, Ba²⁺ und Cl⁻) durch zwei verschiedenen Membranen NF270 (DuPont) und NF245 (DuPont) bei einem Druck von 15 bar, einer Zulaufkonzentration von Lithium-Ionen von 100 mg/l, einer Zulaufkonzentration von Natrium-Ionen von 2000 mg/l, und einer Temperatur 40 °C (siehe Beispiel 2, Lösung d) .

Bei Zugabe von NaCl (Na⁺-Zulaufkonzentration 2000 mg/l) erhöht sich im Experiment Beispiel 2, Lösung d (Figur 4), im Vergleich zu Experiment Beispiel 2, Lösung c (Figur 3), unabhängig von der Membran der Rückhalt aller Ionen mit Ausnahme von Chlorid, dessen Rückhalt unter Einsatz der Membran NF245 im Rahmen des Messfehlers in etwa gleichbleibt. Die Membran NF270 zeigt nach wie vor einen geringeren Rückhalt von allen Ionen in der Lösung, der eine Trennung von ein- und mehrwertigen Ionen nicht ermöglicht. Als Anion wird Chlorid von der Membran NF270 aufgrund der Abstoßung zwischen der Membranoberflächenladung und der Anionen mit bis zu ca. 20 % am stärksten zurückgehalten. Die Membran NF245 hingegen zeigt weiterhin einen guten Rückhalt der zweiwertigen Ionen von > 80 %, allerdings erhöht sich auch der Rückhalt der Lithium-Ionen, da Natriumionen einen kleineren Hydratationsradius aufweisen und damit die Membran leichter passieren. Der Rückhalt von Chlorid wird auch durch den Erhalt der Ladungsneutralität in Permeat und Retentat beeinflusst.

### Beispiel 3:

Aufgrund der Ergebnisse aus den Beispielen 1 und 2 wurden Experimente mit erhöhten Na⁺-Zulaufkonzentrationen (bis 35000 mg/l) mit der Membran NF245 durchgeführt.
Membran-Anlage: Dead-End-Verfahren (Rührzellen)
Modelllösungen (die Lösungen beziehen sich auf 1 Liter Wasser:
   a. 150 mg Li⁺, 10 mg Ba²⁺, 400 mg Mg²⁺, 2000 mg Na⁺ - gelöst als Chlorid.
   b. 150 mg Li⁺, 10 mg Ba²⁺, 400 mg Mg²⁺, 5000 mg Na⁺ - gelöst als Chlorid.
   c. 150 mg Li⁺, 10 mg Ba²⁺, 400 mg Mg²⁺, 10000 mg Na⁺ - gelöst als Chlorid.
   d. 150 mg Li⁺, 10 mg Ba²⁺, 400 mg Mg²⁺, 20000 mg Na⁺ - gelöst als Chlorid.
   e. 150 mg Li⁺, 10 mg Ba²⁺, 400 mg Mg²⁺, 35000 mg Na⁺ - gelöst als Chlorid
Temperatur: 25 °C
Druck: Es wurden mit zunehmend höheren Na⁺- und Cl⁻-Konzentrationen Drücke zwischen 7 bar und 25 bar angewendet. Die angesetzten Drücke wurden aus dem jeweiligen osmotischen Druck berechnet, der sich wiederum aus den jeweiligen Ionen-Konzentrationen der Rückhalte, die sich aus den Daten aus Beispiel 2 ergaben, berechnen ließ.

Die Experimente bilden realitätsnah die Konzentrationen von geothermischen Wässern hinsichtlich Mg²⁺ und Ba²⁺ - als Stellvertreter für zweiwertige Ionen - sowie Na⁺ und Li⁺ - als Stellvertreter für einwertige Ionen - ab. Dazu wurden stufenweise die Na-Konzentrationen erhöht, bis mit der Modelllösung in Beispiel 3, Lösung e (ca. 1,5 molare NaCl-Lösung) bezüglich der Na- und Cl-Konzentration reale Konzentrationen erreicht wurden.

Zur Orientierung für die Komposition der Modelllösung wurden die Daten von Sanjuan et *al.* (Sanjuan et al., Chemical Geology 2016, 428, 27-47) verwendet. Um den Einfluss der Anionen auf die Selektivität der Membran für zweiwertige Kationen auszuschließen, wurde nur mit Chlorid-Ionen gearbeitet.

Alle Experimente wurden mindestens zweimal durchgeführt (Duplikatmessung).

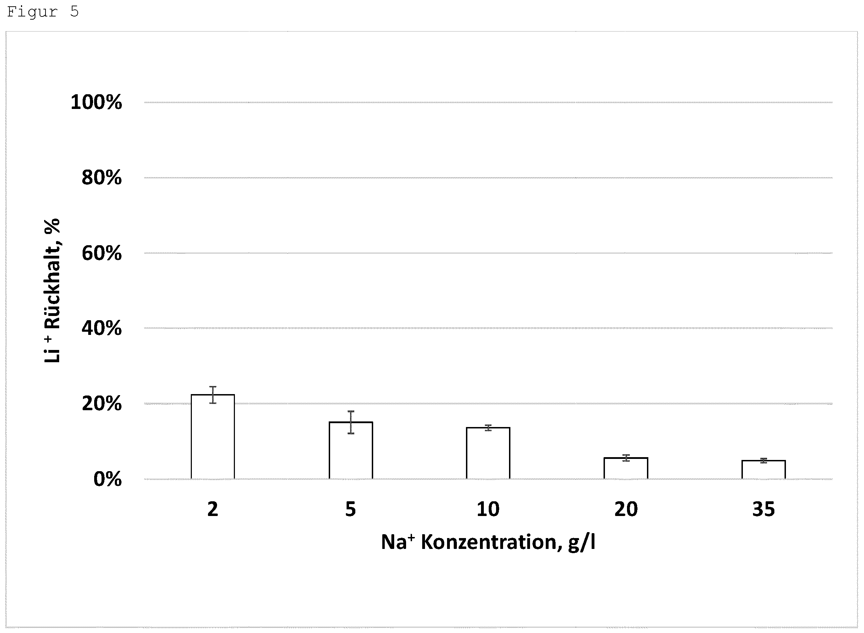

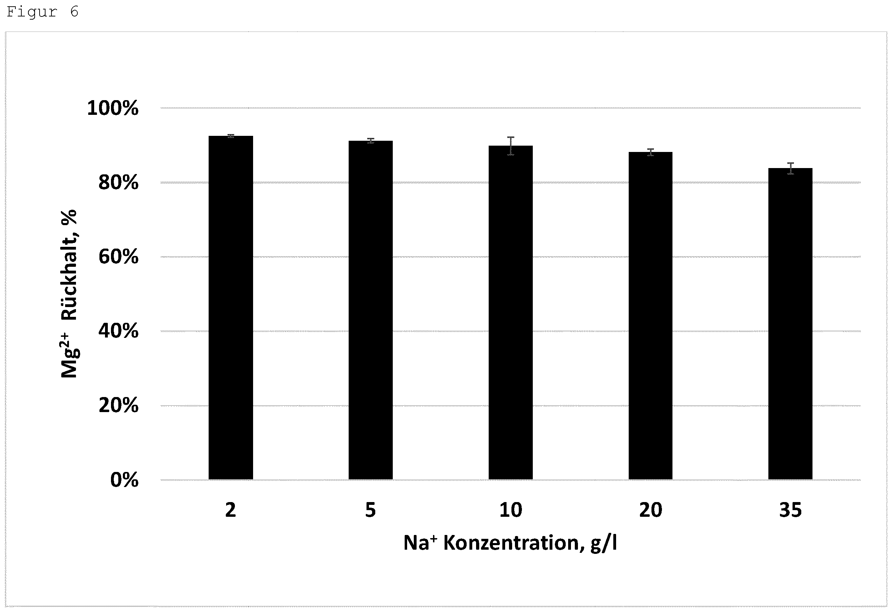

In den Figuren 5 und 6 wird der Einfluss der zunehmenden NaCl-Konzentration auf den Rückhalt von Lithium und Magnesium in Annäherung an realistische Konzentrationen in hochsalinaren Geothermiewässern gezeigt.

Bei zunehmender NaCl-Konzentration nimmt der Rückhalt sowohl von Lithium (Figur 5) als auch von Magnesium (Figur 6) generell ab. Bei geringen Ionenstärken und neutralen pH-Werten ist die Membran negativ geladen. Die Zunahme der Ionenstärke der Lösung kompensiert zunehmend die negative Membranladung, sodass der Rückhalt der Anionen aufgrund von Abstoßungseffekten minimiert wird. Dadurch wird Chlorid aufgrund des geringen Hydratationsradius kaum zurückgehalten und der Siebeffekt gewinnt an Bedeutung, sodass sowohl Lithium als auch Natrium die Membran leichter passieren.

Magnesium wird aufgrund des Siebeffektes zurückgehalten und deshalb weniger von der Zunahme der Ionenstärke der Lösung beeinflusst (Figur 6).

In Beispiel 3 konnte gezeigt werden, dass das primär bereits geringe Mg/Li-Stoffmengenverhältnis von 0,75 in Beispiel 3, Lösung e, durch die Nanofiltration um den Faktor 4,4 auf ein Mg/Li-Stoffmengenverhältnis von 0,17 reduziert werden konnte.

### Beispiel 4:

Die Experimente zur Membrandestillation wurden mit einer Membrandestillationsanlage, ausgestattet mit einem Direktkontakt-Membrandestillationsmodul, bei einer Starttemperatur von 65 °C durchgeführt. Als Ausgangslösung wurde eine Lösung angesetzt, die in ihren Konzentrationen identisch mit der Konzentration des Permeats aus Experiment Beispiel 3, Lösung e war, da die Ergebnisse aus diesem Experiment den zu erwartenden realen Bedingungen am ehesten entsprechen.

Mit den Experimenten wurde eine Anreicherung der Lithiumkonzentration um einen Faktor 4 nach 7 Tagen erreicht (Tabelle 1).

**Tabelle 1: Darstellung der Analysedaten der Membrandestillationsexperimente im zeitlichen Verlauf.**

| Analysen | Li⁺ (mg/l) | Mg²⁺ (mg/l) | Ba²⁺ (mg/l) | Na⁺ (g/l) |
|---|---|---|---|---|
| Startlösung | 128 | 66 | 2 | 31,6 |
| 4. Tag | 197 | 96 | 3 | 47,1 |
| 5. Tag | 331 | 159 | 5 | 76,2 |
| 7. Tag | 522 | 254 | 8 | 126,5 |

Eine größere Lithium-Anreicherung ist möglich. Man muss jedoch beachten, dass die Löslichkeiten der in der Lösung enthaltenen Salze nicht überschritten werden. Eine Überschreitung der jeweiligen Löslichkeitsprodukte führt zu Ausfällungen, die den Prozess der Membrandestillation durch Fouling und Aufhebung der Hydrophobie verhindern (D. Winter, Membrane Distillation. A Thermodynamic, Technological and Economic Analysis. (2014), Dissertation D386, Technical University of Kaiserslautern, Shaker Verlag, Aachen, Seite 325 ff.).

Die elektrische Leitfähigkeit vom Kondensat war sehr niedrig und lag während der Anreicherung zwischen 1 und 2 µS/cm. Damit ist ebenso eine weitere technische Nutzung des Kondensats (deionisiertes Wasser) in verschiedenen Bereichen (inklusive Kesselwasser) denkbar.

## Patentansprüche

1. Verfahren zur Extraktion von Lithium-Ionen aus Geothermalwasser innerhalb eines binären Geothermiekraftwerks, umfassend die Schritte
A) Hochpumpen von Geothermalwasser mit einer Temperatur von 120 °C - 180 °C aus einem geothermischen Reservoir **(11)** über eine Produktionsbohrung **(1)** in einen Wärmetauscher **(2)** unter einem Druck von 15 - 35 bar;
B) Durchlaufen des Geothermalwassers aus Schritt A) durch den Wärmetauscher **(2);**
C) Zuführung von 100 % des Geothermalwassers aus Schritt B) in mindestens ein Nanofiltrationsmodul **(3);**
D) Nanofiltration des in Schritt C) dem mindestens einem Nanofiltrationsmodul **(3)** zugeführten Geothermalwassers zur Abtrennung von Alkalimetall-Ionen und anderen einwertigen Ionen von mehrwertigen Ionen unter einem Druck von 15 - 35 bar und einer Temperatur von 50 °C - 80 °C und direkte Reinjektion der an mehrwertigen Ionen angereicherten Restlösung ins geothermische Reservoir **(11)** über mindestens eine Reinjektionsbohrung **(4);**
E) Überführung des Permeats der Nanofiltration aus Schritt D) in eine Ausfällungseinheit **(5a** oder **5b)** zur Ausfällung der noch vorhandenen zweiwertigen Erdalkali-Ionen;
F) Ausfällung der noch vorhandenen zweiwertigen Erdalkali-Ionen in der Ausfällungseinheit **(5a** oder **5b)** aus dem Permeat der Nanofiltration des Schrittes D);
G) Transport des an zweiwertigen Ionen abgereicherten Permeats aus Schritt F) durch eine Umwälzpumpe **(6a** oder **6b)** zu einem zweiten Wärmetauscher **(7a** oder **7b);**
H) Aufheizen des Permeats aus Schritt G) in dem zweiten Wärmetauscher **(7a** oder **7b)** auf 65 - 85 °C;
I) Membrandestillation **(8)** des in Schritt H) aufgeheizten Permeats unter Normaldruck und einer Temperatur von 65 °C - 85 °C;
J) Abtrennung von in Schritt I) aufkonzentrierten Lithium-Ionen in einer Abtrennungseinheit **(9)** durch Ausfällung, Ionentauscher, Absorptionsverfahren, Flüssig-Flüssigextraktion oder Elektrodialyse.

2. Verfahren nach Anspruch 1, wobei dem Geothermalwasser in Schritt A) vor dem Eintritt in den Wärmetauscher **(2)** Scaling-Inhibitoren und Korrosionsinhibitoren zugesetzt werden.

3. Verfahren nach Anspruch 2, wobei die zugesetzten Scaling-Inhibitoren und Korrosionsinhibitoren ausgewählt sind aus Organophosphaten oder Polycarbonsäuren.

4. Verfahren nach einem der vorangehenden Ansprüche, wobei die Nanofiltration mit einer Polymermembran oder einer Keramikmembran durchgeführt wird.

5. Verfahren nach Anspruch 4, wobei die Nanofiltration in einem oder mehreren Wickelmodulen, Hohlfaser- oder Rohrmodulen durchgeführt wird.

6. Verfahren nach den Ansprüchen 4 oder 5, wobei während der Nanofiltration in Schritt D) mindestens 80 % der Alkalimetall-Ionen und der anderen einwertigen Ionen von mehrwertigen Ionen abgetrennt werden.

7. Verfahren nach einem der vorangehenden Ansprüche, wobei die Membrandestillation als Direktkontakt-Membrandestillation, als Air-Gap-Membrandestillation oder als Vakuum-Membrandestillation durchgeführt wird.

8. Verfahren nach einem der vorangehenden Ansprüche, wobei Lithium-Ionen in Schritt J) durch chemische Ausfällung abgetrennt werden.

9. Verfahren nach Anspruch 8, wobei Lithium-Ionen als Lithiumcarbonat oder Lithiumphosphat ausgefällt und von der Restlösung durch Filtration oder Zentrifugation abgetrennt werden.

10. Verfahren nach einem der vorangehenden Ansprüche, wobei die Restlösung nach der Abtrennung von Lithium-Ionen in Schritt J) für die Gewinnung von Rubidium- und Cäsium-Ionen in einer Abtrennungseinheit **(10)** verwendet wird.

11. Verfahren nach einem der vorangehenden Ansprüche, wobei die Restlösung nach der Abtrennung von Lithium-Ionen in Schritt J) und gegebenenfalls nach der Gewinnung von Cäsium- und Rubidium-Ionen in der Abtrennungseinheit **(10)** über die mindestens eine Reinjektionsbohrung **(4)** in **das** geothermische Reservoir **(11)** reinjiziert wird.

12. Vorrichtung zur Lithium-Extraktion aus einem binären Geothermiekraftwerk, umfassend
a) mindestens eine Produktionsbohrung **(1),** aus der Geothermalwasser aus einem geothermischen Reservoir **(11)** mit einer Temperatur von 120 °C - 180 °C unter einem Druck von 15 - 35 bar in einen Wärmetauscher **(2)** leitbar ist;
b) ein dem Wärmetauscher **(2)** nachgeschaltetes Nanofiltrationsmodul bzw. mehrere Nanofiltrationsmodule **(3),** in dem unter einem Druck von 15 - 35 bar und einer Temperatur von 50 °C - 80 °C die einwertigen Ionen größtenteils permeieren und die zweiwertigen Ionen des Geothermalwassers zurückhaltbar sind;
c) mindestens eine Reinjektionsbohrung **(4),** über die das an mehrwertigen Ionen angereicherte Retentat (Konzentrat) in das geothermische Reservoir **(11)** reinjizierbar ist;
d) eine Ausfällungseinheit **(5a** oder **5b),** in der die noch vorhandenen zweiwertigen Erdalkali-Ionen des Permeats der Nanofiltration ausfällbar sind;
e) eine Umwälzpumpe **(6a** oder **6b),** die das an zweiwertigen Ionen abgereicherte Permeat der Nanofiltration zu einem zweiten Wärmetauscher **(7a** oder **7b)** pumpt;
f) einen zweiten Wärmetauscher **(7a** oder **7b),** wobei sich der zweite Wärmetauscher entweder zwischen der Turbinen-/Generatoreinheit **(I, II)** und den Kondensatoren **(III)** oder zwischen Produktionsbohrung **(1)** und Wärmetauscher (2) befindet;
g) ein Membrandestillationsmodul **(8),** in dem das an mehrwertigen Ionen abgereicherte Permeat der Nanofiltration unter Normaldruck und einer Temperatur von 65 °C - 85 °C aufkonzentriert wird;
h) eine Abtrennungseinheit **(9),** in der Lithium-Ionen durch Ausfällung, Ionentauscher, Absorptionsverfahren, Flüssig-Flüssigextraktion oder Elektrodialyse abtrennbar sind.

13. Vorrichtung nach Anspruch 12, wobei sich an die Abtrennungseinheit **(9)** für die Abtrennung von Lithium-Ionen eine Abtrennungseinheit **(10)** für die Gewinnung von Rubidium- und Cäsium-Ionen anschließt.

## Claims

1. A process for extracting lithium ions from geothermal water within a binary geothermal power plant, comprising the steps
A) Pumping geothermal water with a temperature of 120 °C - 180 °C from a geothermal reservoir **(11)** via a production well **(1)** into a heat exchanger **(2)** under a pressure of 15 - 35 bar;
B) Passing the geothermal water from step A) through the heat exchanger **(2);**
C) Feeding 100% of the geothermal water from step B) into at least one nanofiltration module **(3);**
D) Nanofiltration of the geothermal water supplied to the at least one nanofiltration module **(3)** in step C) for the separation of alkali metal ions and other monovalent ions from multivalent ions under a pressure of 15 - 35 bar and a temperature of 50 °C - 80 °C and direct reinjection of the residual solution enriched in multivalent ions into the geothermal reservoir **(11)** via at least one reinjection well **(4);**
E) Transferring the permeate of the nanofiltration from step D) to a precipitation unit **(5a** or **5b)** for the precipitation of the remaining divalent alkaline earth ions;
F) Precipitation of the remaining divalent alkaline earth ions in the precipitation unit **(5a** or **5b)** from the permeate of the nanofiltration of step D);
G) Transporting the permeate depleted of divalent ions from step F) by a circulation pump **(6a** or **6b)** to a second heat exchanger **(7a** or **7b);**
H) Heating the permeate from step G) in the second heat exchanger **(7a** or **7b)** to 65 - 85 °C;
I) Membrane distillation **(8)** of the permeate heated in step H) under normal pressure and a temperature of 65 °C - 85 °C;
J) Separation of lithium ions concentrated in step I) in a separation unit **(9)** by precipitation, ion exchange, absorption processes, liquid-liquid extraction or electrodialysis.

2. Process according to claim 1, wherein scaling inhibitors and corrosion inhibitors are added to the geothermal water in step A) before entering the heat exchanger **(2).**

3. The process according to claim 2, wherein the added scaling inhibitors and corrosion inhibitors are selected from organophosphates or polycarboxylic acids.

4. Process according to any one of the preceding claims, wherein the nanofiltration is carried out with a polymer membrane or a ceramic membrane.

5. The process according to claim 4, wherein the nanofiltration is carried out in one or more wound modules, hollow fiber or tubular modules.

6. Process according to claims 4 or 5, wherein during the nanofiltration in step D) at least 80% of the alkali metal ions and the other monovalent ions are separated from multivalent ions.

7. Process according to any one of the preceding claims, wherein the membrane distillation is carried out as direct contact membrane distillation, as air-gap membrane distillation or as vacuum membrane distillation.

8. Process according to any one of the preceding claims, wherein lithium ions are separated in step J) by chemical precipitation.

9. The process according to claim 8, wherein lithium ions are precipitated as lithium carbonate or lithium phosphate and separated from the residual solution by filtration or centrifugation.

10. Process according to any one of the preceding claims, wherein the residual solution after the separation of lithium ions in step J) is used for the recovery of rubidium and caesium ions in a separation unit **(10).**

11. Process according to any one of the preceding claims, wherein the residual solution after the separation of lithium ions in step J) and optionally after the recovery of caesium and rubidium ions in the separation unit **(10)** is reinjected into the geothermal reservoir **(11)** via the at least one reinjection well **(4).**

12. Device for lithium extraction from a binary geothermal power plant, comprising
a) At least one production well **(1)** from which geothermal water from a geothermal reservoir **(11)** at a temperature of 120 °C - 180 °C under a pressure of 15 - 35 bar can be conducted into a heat exchanger **(2);**
b) One or more nanofiltration modules **(3)** connected downstream of the heat exchanger **(2),** in which, under a pressure of 15 - 35 bar and a temperature of 50 °C - 80 °C, the monovalent ions largely permeate and the divalent ions of the geothermal water can be retained;
c) At least one reinjection well **(4)** through which the retentate (concentrate) enriched in multivalent ions can be reinjected into the geothermal reservoir **(11);**
d) A precipitation unit **(5a** or **5b)** in which the remaining divalent alkaline earth ions of the nanofiltration permeate can be precipitated;
e) A circulation pump **(6a** or **6b)** which pumps the permeate of the nanofiltration depleted of divalent ions to a second heat exchanger **(7a or 7b);**
f) A second heat exchanger **(7a** or **7b),** the second heat exchanger being located either between the turbine/generator unit (I, II) and the condensers (III) or between the production well **(1)** and the heat exchanger **(2);**
g) A membrane distillation module **(8)** in which the nanofiltration permeate depleted in multivalent ions is concentrated under normal pressure and a temperature of 65 °C - 85 °C;
h) A separation unit **(9)** in which lithium ions can be separated by precipitation, ion exchange, absorption processes, liquid-liquid extraction or electrodialysis.

13. Device according to claim 12, wherein the separation unit **(9)** for the separation of lithium ions is followed by a separation unit **(10)** for the extraction of rubidium and caesium ions.

## Revendications

1. Procédé d'extraction d'ions lithium à partir d'eau géothermique dans une centrale géothermique binaire, comprenant les étapes
A) Pompage d'eau géothermique à une température de 120 °C à 180 °C depuis un réservoir géothermique **(11)** via un puits de production **(1)** dans un échangeur de chaleur **(2)** sous une pression de 15 à 35 bars;
B) Passage de l'eau géothermique de l'étape A) à travers l'échangeur de chaleur **(2);**
C) Introduire 100 % de l'eau géothermique de l'étape B) dans au moins un module de nanofiltration **(3);**
D) Nanofiltration de l'eau géothermique fournie au moins à un module de nanofiltration **(3)** à l'étape C) pour la séparation des ions de métaux alcalins et d'autres ions monovalents des ions multivalents sous une pression de 15 à 35 bars et une température de 50 °C à 80 °C et réinjection directe de la solution résiduelle enrichie en ions multivalents dans le réservoir géothermique **(11)** via au moins un puits de réinjection **(4);**
E) Transférer le perméat de la nanofiltration de l'étape D) vers une unité de précipitation **(5a** ou **5b)** pour la précipitation des ions alcalino-terreux divalents restants;
F) Précipitation des ions alcalino-terreux divalents restants dans l'unité de précipitation **(5a** ou **5b)** à partir du perméat de la nanofiltration de l'étape D);
G) Transporter le perméat appauvri en ions divalents de l'étape F) par une pompe de circulation **(6a** ou **6b)** vers un deuxième échangeur de chaleur **(7a** ou **7b);**
H) Chauffer le perméat de l'étape G) dans le deuxième échangeur de chaleur **(7a** ou **7b)** à 65 - 85 °C;
I) Distillation membranaire **(8)** du perméat chauffé à l'étape H) sous pression normale **et** à une température de 65 °C - 85 °C;
J) Séparation des ions lithium concentrés à l'étape I) dans une unité de séparation **(9)** par précipitation, échange d'ions, procédés d'absorption, extraction liquide-liquide ou électrodialyse.

2. Procédé selon la revendication 1, dans lequel des inhibiteurs d'entartrage et des inhibiteurs de corrosion sont ajoutés à l'eau géothermique à l'étape A) avant d'entrer dans l'échangeur de chaleur **(2).**

3. Procédé selon la revendication 2, dans lequel les inhibiteurs d'entartrage et les inhibiteurs de corrosion ajoutés sont choisis parmi les organophosphates ou les acides polycarboxyliques.

4. Procédé selon l'une quelconque des revendications précédentes, dans lequel la nanofiltration est réalisée avec une membrane polymère ou une membrane céramique.

5. Procédé selon la revendication 4, dans lequel la nanofiltration est réalisée dans un ou plusieurs modules enroulés, à fibres creuses ou tubulaires.

6. Procédé selon les revendications 4 ou 5, dans lequel lors de la nanofiltration à l'étape D) au moins 80 % des ions de métaux alcalins et des autres ions monovalents sont séparés des ions multivalents.

7. Procédé selon l'une quelconque des revendications précédentes, dans lequel la distillation membranaire est réalisée sous forme de distillation membranaire à contact direct, de distillation membranaire à espace d'air ou de distillation membranaire sous vide.

8. Procédé selon l'une quelconque des revendications précédentes, dans lequel les ions lithium sont séparés à l'étape J) par précipitation chimique.

9. Procédé selon la revendication 8, dans lequel les ions lithium sont précipités sous forme de carbonate de lithium ou de phosphate de lithium et séparés de la solution résiduelle par filtration ou centrifugation.

10. Procédé selon l'une quelconque des revendications précédentes, dans lequel la solution résiduelle après la séparation des ions lithium à l'étape J) est utilisée pour la récupération des ions rubidium et césium dans une unité de séparation **(10).**

11. Procédé selon l'une quelconque des revendications précédentes, dans lequel la solution résiduelle après la séparation des ions lithium à l'étape J) et éventuellement après la récupération des ions césium et rubidium dans l'unité de séparation **(10)** est réinjectée dans le réservoir géothermique **(11)** via le ou les puits de réinjection **(4).**

12. Dispositif d'extraction de lithium d'une centrale géothermique binaire, comprenant
a) au moins un puits de production **(1)** à partir duquel l'eau géothermique provenant d'unréservoir géothermique **(11)** à une température de 120 °C à 180 °C sous une pression de 15 à 35 bars peut être conduite dans un échangeur de chaleur **(2) ;**
b) un ou plusieurs modules de nanofiltration **(3)** connectés en aval de l'échangeur de chaleur **(2),** dans lesquels, sous une pression de 15 à 35 bars et une température de 50 °C à 80 °C, les ions monovalents pénètrent en grande partie et les ions divalents de l'eau géothermique peuvent être retenus;
c) au moins un puits de réinjection **(4)** à travers lequel le rétentat (concentré) enrichi en ions multivalents peut être réinjecté dans le réservoir géothermique **(11);**
d) une unité de précipitation **(5a** ou **5b)** dans laquelle les ions alcalino-terreux divalents restants du perméat de nanofiltration peuvent être précipités;
e) une pompe de circulation **(6a** ou **6b)** qui pompe le perméat de la nanofiltration appauvri en ions divalents vers un deuxième échangeur de chaleur **(7a** ou **7b);**
f) un deuxième échangeur de chaleur **(7a** ou **7b),** le deuxième échangeur de chaleur étant situé soit entre l'unité turbine/générateur (I, II) et les condenseurs (III) soit entre le puits de production **(1)** et l'échangeur de chaleur **(2) ;**
g) un module de distillation membranaire **(8)** dans lequel le perméat de nanofiltration appauvri en ions multivalents est concentré sous pression normale et à une température de 65 °C - 85 °C;
h) une unité de séparation **(9)** dans laquelle les ions lithium peuvent être séparés par précipitation, échange d'ions, procédés d'absorption, extraction liquide-liquide ou électrodialyse.

13. Dispositif selon la revendication 12, dans lequel l'unité de séparation **(9)** pour la séparation des ions lithium est suivie d'une unité de séparation **(10)** pour l'extraction des ions rubidium et césium.
